# EUROPÄISCHE PATENTSCHRIFT

(11) **EP 4 083 477 B1**
(45) Veröffentlichungstag und Bekanntmachung des Hinweises auf die Patenterteilung: **20.05.2026**
(21) Anmeldenummer: 22166744.7
(22) Anmeldetag: 05.04.2022
(51) Int. Cl.: F16J 15/06, B05B 3/02

(54) **DICHTUNGSBUCHSE UND HOCHDRUCK-REINIGUNGSVORRICHTUNG**
SEALING BUSHING AND HIGH-PRESSURE CLEANING DEVICE
DOUILLE D'ÉTANCHÉITÉ ET DISPOSITIF DE NETTOYAGE HAUTE PRESSION

(30) Priorität: 22.04.2021 DE 102021110357
(43) Veröffentlichungstag der Anmeldung: 02.11.2022
(73) Patentinhaber: Hammelmann GmbH, 59302 Oelde (DE)
(72) Erfinder: HELMIG, Egbert, 59320 Ennigerloh (DE); STOFFERS, Fabian, 33378 Rheda-Wiedenbrück (DE)
(74) Vertreter: Dantz, Jan Henning

(56) Entgegenhaltungen:
- EP-A2- 0 154 308
- EP-B1- 0 885 643
- US-A- 3 874 637
- US-A- 4 854 545

## Beschreibung

Die vorliegende Erfindung betrifft eine Hochdruck-Reinigungsvorrichtung gemäß dem Oberbegriff des Anspruchs 1.

Gattungsgemäße Hochdruck-Reinigungsvorrichtungen mit Dichtungsbuchsensind beispielsweise aus der nachveröffentlichten DE 10 2019 134 040 A1 bekannt ist.

Die Dichtungsbuchse dient dabei der Abdichtung einer relativ zur Dichtungsbuchse rotierenden Hohlwelle unter Ausbildung einer Spaltdichtung zwischen einem Innenmantel der Dichtungsbuchse und dem Außenmantel der Hohlwelle. Aus der US 3,874,637 A ist eine Dichtungsbuchse bekannt, die einen zylindermantelförmigen Grundkörper mit mehreren in den Grundkörper senkrecht zu einer Rotationsachse nebeneinander eingebrachten Fensteröffnungen aufweist sowie in Richtung der Rotationsachse beidseits der Fensteröffnungen in einer Mantelaußenfläche des Grundkörpers voneinander beabstandet angeformte umlaufende Dichtringnuten. Dabei ist ein Abstand der voneinander beabstandeten Dichtringnuten in einem ersten Mantelbereich des Grundkörpers größer als ein Abstand der voneinander beabstandeten Dichtringnuten in einem dem ersten Mantelbereich gegenüberliegenden zweiten Mantelbereich des Grundkörpers.

Weiteren Dichtungsbuchsen sind aus EP 0 154 308 A2, EP 0 885 643 B1 und US 4 854 545 A bekannt. Die Hochdruck-Reinigungsvorrichtung, in der solche Dichtungsbuchsen eingesetzt werden, besteht üblicherweise aus einer Eingangshohlwelle und mehreren mit der Eingangshohlwelle fluidisch verbundene Ausgangshohlwellen. Ein die Ausgangshohlwellen aufnehmendes Ausgangshohlwellengehäuse dreht sich dabei mit in einem Eingangshohlwellengehäuse aufgenommenen Eingangshohlwelle.

Die aus der eingangs erwähnten Druckschrift bekannte Hochdruck-Reinigungsvorrichtung hat sich an sich bewährt.

Als problematisch hat sich herausgestellt, dass durch die Rotation des Ausgangshohlwellengehäuses auf die die Ausgangshohlwellen gegenüber dem Ausgangshohlwellengehäuse abdichtenden Dichtungsbuchsen Fliehkräfte wirken, durch die die meist schwimmend in dem Hohlwellengehäuse gelagerte Dichtungsbuchse fliehkraftbedingt nicht zentral in der dazu vorgesehenen Aufnahme, sondern in eine exzentrische Position gedrückt wird, was zu einer erhöhten Leckage aufgrund des dadurch entstehenden exzentrischen Spaltes und ggfs. zu vorzeitigem Verschleiß der Dichtungsbuchsen durch Reibung derselben am Hohlwellengehäuse führt.

Aufgabe der vorliegenden Erfindung ist es, eine Hochdruck-Reinigungsvorrichtung dahingehend weiterzuentwickeln, dass die Dichtungsbuchse auch bei Einwirken von Fliehkräften möglichst zentrisch in der Aufnahme im Hohlwellengehäuse verbleibt.

Diese Aufgabe wird durch eine Hochdruck-Reinigungsvorrichtung mit den Merkmalen des Anspruchs 1 gelöst.

Die erfindungsgemäße Hochdruck-Reinigungsvorrichtung weist ein Eingangshohlwellengehäuse auf, eine im Eingangshohlwellengehäuse relativ zu diesem um eine Drehachse rotierbar gelagerte Eingangshohlwelle, die an eine hydraulische Druckquelle anschließbar ist.

Die Hochdruck-Reinigungsvorrichtung weist des Weiteren ein relativ zum Eingangshohlwellengehäuse zusammen mit der Eingangshohlwelle um die Drehachse rotierbar gelagertes Ausgangshohlwellengehäuse auf.

Im Ausgangshohlwellengehäuse ist wenigstens eine um eine Drehachse rotierbar gelagerte Ausgangshohlwelle angeordnet.

Ein Fluidkanal der Eingangshohlwelle ist über einen Verbindungskanal mit einem Fluidkanal der Ausgangshohlwelle fluidisch gekoppelt.

Im Ausgangshohlwellengehäuse ist ein Teilstück der Ausgangshohlwelle von einer Dichtungsbuchse umgriffen, die orts- und drehfest zum Ausgangshohlwellengehäuse angeordnet sind und mit der Ausgangshohlwelle eine Spaltdichtung ausbildet.

Die Dichtungsbuchse weist einen zylindermantelförmigen Grundkörper mit mehreren in den Grundkörper senkrecht zu einer Rotationsachse nebeneinander eingebrachten Fensteröffnungen auf sowie in Richtung der Rotationsachse beidseits der Fensteröffnungen an einer Mantelaußenfläche der Dichtungsbuchse angeformte voneinander beabstandete umlaufende Dichtringnuten, in denen Dichtringe zur Ausbildung statischer Dichtungen zum Ausgangshohlwellengehäuse aufgenommen sind.

Die Dichtringnuten sind schräg zu einer Rotationsebene des Ausgangshohlwellengehäuses ausgerichtet.

Ein Abstand der voneinander beabstandeten Dichtringnuten ist in einem radial von der Drehachse des Ausgangshohlwellengehäuses entfernten Mantelbereich des Grundkörpers der Dichtungsbuchse größer als ein Abstand der voneinander beabstandeten Dichtringnuten in einem radial von der Drehachse des Ausgangshohlwellengehäuses nahen Mantelbereich des Grundkörpers der Dichtungsbuchsen.

Durch den so variierenden Abstand zwischen den Dichtringnuten über die Mantelfläche der Dichtbuchse ergeben sich unterschiedlich große Angriffsflächen im Bereich zwischen den Dichtringnuten, woraus bei entsprechender Einbaustellung der Dichtungsbuchse und Druckbeaufschlagung eine Kraft resultiert, welche bei Rotation der Dichtbuchse um eine außerhalb der Dichtbuchse liegende Rotationsachse der Fliehkraft entgegenwirkt.

Dies führt dazu, dass die Dichtungsbuchse zentrisch oder nahezu zentrisch in der dazu vorgesehenen Ausnehmung im Hohlwellengehäuse verbleibt.

Vorteilhafte Ausführungsvarianten der Erfindung sind Gegenstand der Unteransprüche.

In einer vorteilhaften Ausführungsvariante der Hochdruck-Reinigungsvorrichtung ist ein Innendurchmesser der Dichtungsbuchsen im Bereich der Spaltdichtung beidseits der Fensteröffnungen gleich oder nahezu gleich.

In einer weiteren bevorzugten Ausführungsvariante ist die Eingangshohlwelle mit den Ausgangshohlwellen über ein mechanisches Getriebe miteinander gekoppelt.

Gemäß einer weiteren vorteilhaften Ausführungsvariante der erfindungsgemäßen Hochdruck-Reinigungsvorrichtung sind die Dichtringnuten schräg zu einer Ebene senkrecht zur Rotationsachse des Grundkörpers ausgerichtet.

Durch die schräge Ausrichtung der Dichtringnuten über die Mantelfläche der Dichtbuchse ergibt sich eine Fläche zwischen den Dichtringnuten, die als abgewickelte Flächen zwei mit ihren Basisseiten aneinander liegenden Trapezen entspricht. Um die gewünschte Wirkung (Ausgleich der Fliehkraft) zu erzielen, liegen die längeren Basisseiten der Trapeze radial zur außerhalb der Dichtbuchse liegende Rotationsachse außen, während die kürzeren Basisseiten der Trapeze radial zur außerhalb der Dichtbuchse liegende Rotationsachse innen positioniert sind.

Gemäß einer vorteilhaften Ausführungsvariante der erfindungsgemäßen Hochdruck-Reinigungsvorrichtung sind die Dichtringnuten derart ausgerichtet, dass der größere Abstand der voneinander beabstandeten Dichtringnuten zum kleineren Abstand hin kontinuierlich abnimmt.

In einer vorteilhaften Weiterbildung ist die Mantelaußenfläche des Grundkörpers in einem die Fensteröffnungen ringförmig umgebenden Bereich als taschenartige erste Vertiefung ausgebildet.

In einer weiteren Ausführung ist eine Mantelinnenfläche des Grundkörpers in einem die Fensteröffnungen ringförmig umgebenden Bereich als taschenartige zweite Vertiefung ausgebildet.

Der Grundkörper der Dichtungsbuchse ist gemäß einer weiteren vorteilhaften Ausführungsvariante aus einem Lagermetall, vorzugsweise Bronze gefertigt.

Nachfolgend werden bevorzugte Ausführungsbeispiele anhand der beiliegenden Zeichnungen näher erläutert. Es zeigen:
- Figur 1: eine schematische Schnittdarstellung durch eine Ausführungsvariante einer erfindungsgemäßen Dichtungsbuchse,
- Figuren 2a, b, c: unterschiedliche schematische Ansichten der in Figur 1 gezeigten Dichtungsbuchse
- Figur 3: eine schematische isometrische Darstellung einer Ausführungsvariante einer erfindungsgemäßen Hochdruck-Reinigungsvorrichtung,
- Figur 4: eine Querschnittsdarstellung eines Teilbereichs der in Figur 3 gezeigten Hochdruck-Reinigungsvorrichtung und
- Figur 5: eine Ausschnittvergrößerung eines Bereichs der Hochdruck-Reinigungsvorrichtung mit Darstellung der Anordnung einer der Dichtungsbuchsen.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Dichtungsbuchse, Grundkörper, Dichtringnuten, Hochdruck-Reinigungsvorrichtung, Eingangshohlwelle, Ausgangshohlwelle und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

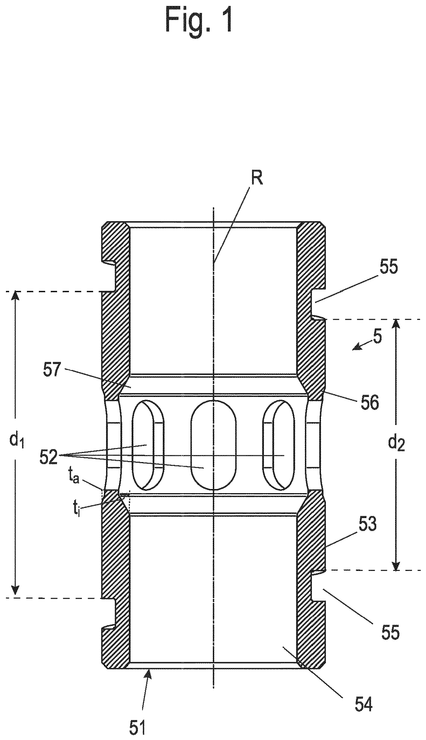

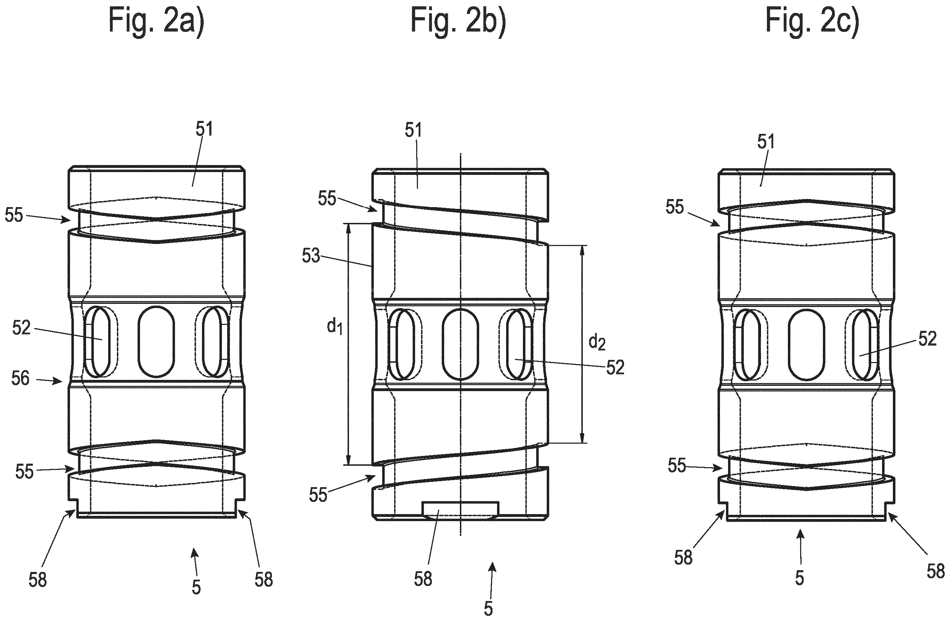

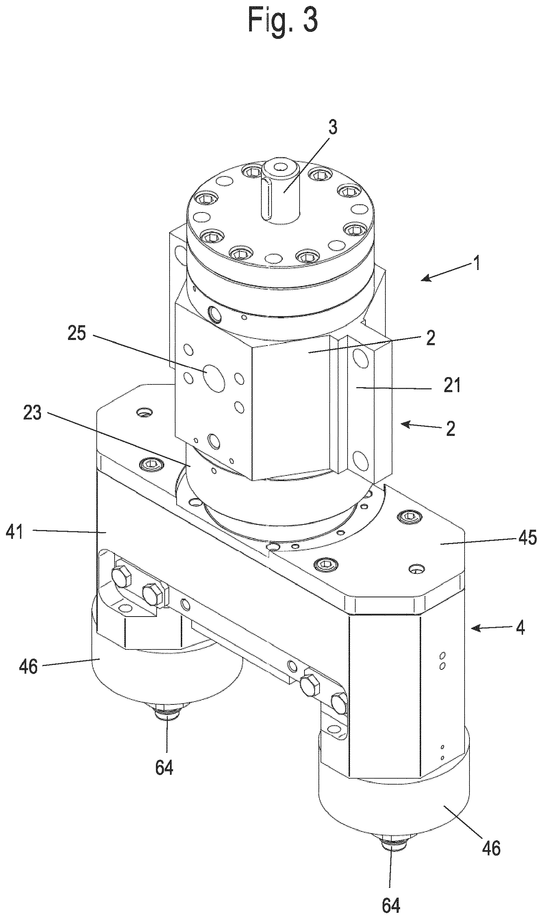

In den Figuren 1 und 2a bis 2c ist eine Ausführungsvariante einer erfindungsgemäßen Dichtungsbuchse mit dem Bezugszeichen 5 bezeichnet. Die Dichtungsbuchse 5 ist dabei insbesondere für den Einbau in eine Hochdruck-Reinigungsvorrichtung geeignet, wie sie in den Figuren 3-5 dargestellt ist.

Die Dichtungsbuchse 5 weist einen zylindermantelförmigen Grundkörper 51 auf. In Richtung einer Rotationsachse R des Grundkörpers 51 etwa mittig sind mehreren nebeneinander eingebrachte Fensteröffnungen 52 vorgesehen, die im Einsatz in der Hochdruck-Reinigungsvorrichtung 1 gemäß Figuren 3 bis 5 der Durchströmung einer unter Hochdruck stehenden Flüssigkeit, beispielsweise Wasser dienen.

Unter Hochdruck werden hier Drücke von 100 bar bis zu etwa 4000 bar, besonders bevorzugt von 150 bar bis 2000 bar verstanden, die in solchen Hochdruck-Reinigungsvorrichtungen 1 zum Einsatz kommen.

In Richtung der Rotationsachse R beidseits der Fensteröffnungen 52 sind, wie in den Figuren 1, 2a, 2b und 2c gezeigt ist, in einer Mantelaußenfläche 53 des Grundkörpers 51 voneinander beabstandet angeformte umlaufende Dichtringnuten 55 angeformt.

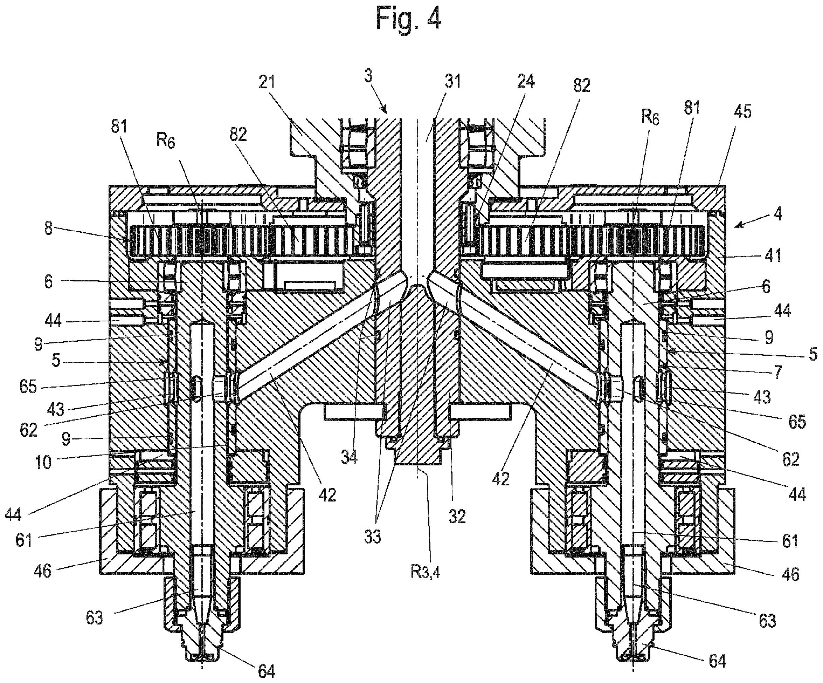

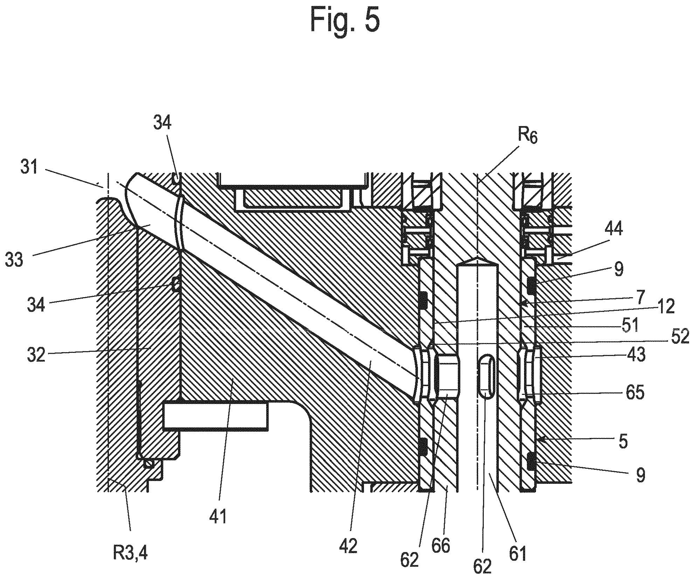

Die Dichtringnuten 55 sind dabei im in Figur 1 gezeigten Querschnitt bevorzugt rechteckig geformt und dienen der Aufnahme eines Dichtrings 9, wie beispielsweise in den Figuren 4 und 5 zu erkennen ist. Je nach Querschnitt des einzusetzenden Dichtrings 9 sind auch andere Querschnittsgestaltungen für die Dichtringnuten 55 denkbar.

Wie in den Figuren 1, 2a, 2b und 2c gezeigt ist, sind die Dichtringnuten 55 schräg zu einer gedachten Ebene ausgerichtet, deren Flächennormale durch die Rotationsachse R des Grundkörpers 51 gebildet wird.

Wie in den Figuren 1 und 2b dargestellt ist, dabei ein Abstand d₁ der voneinander beabstandeten Dichtringnuten 55 in einem ersten Mantelbereich des Grundkörpers 51 größer als ein Abstand d₂ der voneinander beabstandeten Dichtringnuten 55 in einem dem ersten Mantelbereich gegenüberliegenden, d.h. im Umlaufrichtung der Dichtringnuten 55 um 180° versetzten zweiten Mantelbereich des Grundkörpers 51.

Bei der hier gezeigten Ausführungsvariante nimmt der in Figur 2b auf der linken Seite der Mantelfläche maximale Abstand d₁ zum auf der rechten Seite der Mantelfläche zu erkennenden minimalen Abstand d₂ kontinuierlich ab, was den Vorteil hat, dass ein herkömmlicher Dichtring 9 in die Dichtringnuten 55 eingesetzt werden kann.

Denkbar wäre prinzipiell auch eine stufige Ausformung der umlaufenden Dichtringnuten 55.

Wichtig für den bestimmungsgemäßen Gebrauch ist die Einbaurichtung der Dichtungsbuchse 5 in der Hochdruck-Reinigungsvorrichtung, die weiter unten noch näher erläutert wird.

Wie den Figuren 1 und 2a bis 2c weiter zu entnehmen ist, ist die Mantelaußenfläche 53 des Grundkörpers 51 in einem die Fensteröffnungen 52 ringförmig umgebenden Bereich als taschenartige erste umlaufende Vertiefung 56 ausgebildet.

Diese erste Vertiefung 56 dient dabei im in der Hochdruck-Reinigungsvorrichtung 1 eingebauten Zustand der Ausbildung einer Fluidkammer, von der aus das unter Hochdruck stehende Fluid entlang des Außenmantels 53 des Grundkörpers 51 der Dichtungsbuchse 5 bis in den Bereich der in die Dichtringnuten 55 eingelegten Dichtringe 9 gelangt.

Weiter ist eine Mantelinnenfläche 54 des Grundkörpers 51 in einem die Fensteröffnungen 52 ringförmig umgebenden Bereich als taschenartige umlaufende zweite Vertiefung 57 ausgebildet.

Auch die zweite Vertiefung 57 dient im in der Hochdruck-Reinigungsvorrichtung eingebauten Zustand der Ausbildung einer weiteren Fluidkammer, von der aus das unter Hochdruck stehende Fluid entlang der Mantelinnenfläche 54 des Grundkörpers 51 der Dichtungsbuchse 5 mit einer Mantelaußenfläche eines von der Dichtungsbuchse 5 aufgenommenen Ausgangshohlwelle 6 eine Spaltdichtung 7 ausbildet, wie es in Figur 4 und Figur 5 dargestellt ist.

Als Material zur Fertigung der Dichtungsbuchse 5 eignet sich insbesondere ein Lagermetall, vorzugsweise Bronze. Denkbar ist die Fertigung der Dichtungsbuchse 5 aus einem anderen Lagerwerkstoff.

Wie oben erwähnt, eignet sich die Dichtungsbuchse 5 insbesondere zum Einsatz in einer Hochdruck-Reinigungsvorrichtung 1, wie sie nachfolgend anhand der Figuren 3 bis 5 näher erläutert wird.

Die Hochdruck-Reinigungsvorrichtung 1 weist ein Eingangshohlwellengehäuse 2 auf sowie eine im Eingangshohlwellengehäuse 2 relativ zu diesem um eine Drehachse R_{3, 4} rotierbar gelagerte Eingangshohlwelle 3, die an eine hydraulische Druckquelle anschließbar ist.

Zum Anschluss der hydraulische Druckquelle dient dabei ein in Figur 3 gezeigter Druckanschluss 25.

Das Eingangshohlwellengehäuse 2 kann dabei über ein an diesem angeformten Befestigungsflansch 21 ortsfest an einer hier nicht dargestellten Halterung fixiert werden.

Wie weiter in Figur 3 zu erkennen ist, weist die Hochdruck-Reinigungsvorrichtung 1 des Weiteren ein relativ zum Eingangshohlwellengehäuse 2 zusammen mit der Eingangshohlwelle 3 um die Drehachse R_{3, 4} rotierbar gelagertes Ausgangshohlwellengehäuse 4 auf.

Das Ausgangshohlwellengehäuse 4 ist hier so geformt, dass in diesem zwei Ausgangshohlwellen 6 gelagert werden können. Denkbar ist auch die Ausgestaltung eines Ausgangshohlwellengehäuses 4, in dem nur eine oder mehr als zwei, beispielsweise drei oder vier Ausgangshohlwellen 6 gelagert werden können. In letzterem Fall ist das Ausgangshohlwellengehäuse 4 in der Draufsicht bevorzugt sternförmig anstatt balkenförmig wie in der in Figur 3 gezeigten Ausführungsvariante geformt.

Die Ausgangshohlwellen 6 sind dabei in dem Ausgangshohlwellengehäuse 4 voneinander beabstandet angeordnet und um Drehachsen R₆ im Ausgangshohlwellengehäuse 4 rotierbar gelagert.

Die Drehachsen R₆ sind dabei parallel versetzt zur Drehachse R_{3, 4} der Eingangshohlwelle 3 angeordnet. Denkbar ist auch, die Drehachse(n) R₆ winklig, bevorzugt spitzwinklig zur Drehachse R_{3, 4} der Eingangshohlwelle 3 anzuordnen.

Wie in Figur 4 gezeigt ist, ist ein Fluidkanal 31 der Eingangshohlwelle 3 über jeweilige Verbindungskanäle 42 mit jeweiligen Fluidkanälen 61 der Ausgangshohlwellen 6 fluidisch gekoppelt. Dazu ragt die Eingangshohlwelle 3 in eine dazu vorgesehene Durchgangsbohrung im Ausgangshohlwellengehäuse 4 hinein.

Im Bereich eines unteren Endes des Fluidkanals 31 spaltet dieser sich in zwei Ausgänge 33 auf, die in die beiden Verbindungskanäle 42 zur Weiterleitung des unter Hochdruck stehenden Fluids in die Fluidkanäle 61 der Ausgangshohlwellen 6 münden.

Um die Anbindungsstellen des Ausgangshohlwellengehäuses 4 an die Ausgänge 33 der Eingangshohlwelle 3 sind statische Dichtungen 34, beispielsweise in Gestalt von Dichtringen gelegt, wie es in Figur 4 dargestellt ist.

Wie weiter in den Figuren 4 und 5 dargestellt ist, sind die Dichtungsbuchsen 5 orts- und drehfest zum Ausgangshohlwellengehäuse 4 angeordnet.

Jede der Dichtungsbuchsen 5 umgreift dabei ein Teilstück der jeweiligen Ausgangshohlwelle 6 unter Ausbildung einer Spaltdichtung 10. Hier sind an Mantelaußenflächen 53 jeder der Dichtungsbuchsen 5, wie weiter oben bereits erläutert, voneinander beabstandete umlaufende Dichtringnuten 55 angeformt, in denen Dichtringe 9 zur Ausbildung statischer Dichtungen zum Ausgangshohlwellengehäuse 4 aufgenommen sind.

Die Dichtringnuten 55 sind dabei unter Bezugnahme auf die Bauteile der Hochdruck-Reinigungsvorrichtung 1 schräg zu einer Rotationsebene des Ausgangshohlwellengehäuses 4 ausgerichtet.

Die Dichtungsbuchsen 5 sind dabei in einer Orientierung eingebaut, dass der Abstand d₁ der voneinander beabstandeten Dichtringnuten 55 in einem radial von der Drehachse R_{3, 4} des Ausgangshohlwellengehäuses 4 entfernten Mantelbereich des Grundkörpers 51 der Dichtungsbuchsen 5 größer ist als der Abstand d₂ der voneinander beabstandeten Dichtringnuten 55 in einem radial von der Drehachse R_{3, 4} des Ausgangshohlwellengehäuses 4 nahen Mantelbereich des Grundkörpers 51 der Dichtungsbuchsen 5.

Dies ermöglicht, wie eingangs erläutert, dass bei mit der Eingangshohlwelle 3 rotierendem Ausgangshohlwellengehäuse 4 ein fliehkraftbedingtes Andrücken der Dichtungsbuchsen 5 in Richtung der Ausgangshohlwelle 6 verhindert wird.

Dies erfolgt dadurch, dass das unter Hochdruck stehende Fluid in dem Spalt zwischen Außenmantel 53 der Dichtungsbuchse 5 und Innenseite der Ausnehmungen im Ausgangshohlwellengehäuse 4 an einer größeren Fläche der Dichtungsbuchse 5 anliegt als an der Seite des Außenmantels 53 der Dichtungsbuchse 5, die radial näher an der Drehachse R_{3, 4} des Ausgangshohlwellengehäuses 4 ist.

Das Ausbreiten des unter Hochdruck stehenden Fluids in einer Richtung axial zur Drehachse R_{3, 4} des Ausgangshohlwellengehäuses 4 ist durch die näher beieinander liegenden Dichtringe 9 enger begrenzt als an der gegenüberliegenden Seite des Außenmantels 53 der Dichtungsbuchsen 5, wo die Dichtringe 9 weiter voneinander beabstandet sind.

Der Innendurchmesser der Dichtungsbuchsen 5 ist im Bereich der Spaltdichtung 12 beidseits der Fensteröffnungen 52 bevorzugt gleich oder nahezu gleich.

Wie weiter in Figur 4 dargestellt ist, ist die Eingangshohlwelle 3 mit der Ausgangshohlwelle 6 über ein mechanisches Getriebe 8 miteinander gekoppelt.

Das mechanische Getriebe 8 weist dabei ein erstes Getrieberad 81 auf, das auf die Ausgangshohlwelle 6 drehfest aufgesetzt ist, sowie ein zweites Getrieberad 82, das mit dem ersten Getrieberad 81 kämmt und weiter mit einem Getrieberad 24 kämmt, das ortsfest am Eingangshohlwellengehäuse 2 fixiert ist.

Um Leckageflüssigkeit aus den Spaltdichtungen 10 abführen zu können, ist wie in den Figuren 4 und 5 gezeigt, in einem Bereich oberhalb und unterhalb der Dichtungsbuchse 5 im Ausgangshohlwellengehäuse 4 jeweils ein Leckagekanal 44 vorgesehen.

Die Getrieberäder 81, 82 sind bevorzugt durch eine Abdeckung 45 des Ausgangshohlwellengehäuses 4 abgedeckt.

Ebenfalls sind an den Ausgängen 63 der Ausgangshohlwellen 6 angeordnete Düsen 64 aus einer weiteren Abdeckung 46 des Ausgangshohlwellengehäuses 4 hervorstehend angeordnet.

### Bezugszeichenliste

- 1: Hochdruck-Reinigungsvorrichtung

- 2: Eingangshohlwellengehäuse
- 21: Befestigungsflansch
- 22: erstes Gehäuse
- 23: zweites Gehäuse
- 24: Getrieberad
- 25: Druckanschluss

- 3: Eingangshohlwelle
- 31: Fluidkanal
- 32: Hohlwellenkörper
- 33: Ausgang
- 34: Dichtung

- 4: Ausgangshohlwellengehäuse
- 41: Grundkörper
- 42: Verbindungskanal
- 43: Ausnehmung
- 44: Leckagekanal
- 45: Abdeckung
- 46: Abdeckung

- 5: Dichtungsbuchse
- 51: Grundkörper
- 52: Fensteröffnung
- 53: Mantelaußenfläche
- 54: Mantelinnenfläche
- 55: Dichtringnut
- 56: Vertiefung
- 57: Vertiefung

- 6: Ausgangshohlwelle
- 61: Kanal
- 62: Eingangskanal
- 63: Ausgang
- 64: Düse
- 65: Ausnehmung

- 7: Spaltdichtung

- 8: Getriebe
- 81: erstes Getrieberad
- 82: zweites Getrieberad

- 9: Dichtring

- d₁: Abstand
- d₂: Abstand
- tᵢ: Tiefe
- tₐ: Tiefe

- R_{3, 4}: Drehachse
- R₆: Drehachse
- R: Rotationsachse

## Patentansprüche

1. Hochdruck-Reinigungsvorrichtung (1), aufweisend
- ein Eingangshohlwellengehäuse (2),
- eine im Eingangshohlwellengehäuse (2) relativ zu diesem um eine Drehachse (R_{3, 4}) rotierbar gelagerte Eingangshohlwelle (3), die an eine hydraulische Druckquelle anschließbar ist,
- ein relativ zum Eingangshohlwellengehäuse (2) zusammen mit der Eingangshohlwelle (3) um die Drehachse (R_{3, 4}) rotierbar gelagertes Ausgangshohlwellengehäuse (4),
- wenigstens eine im Ausgangshohlwellengehäuse (4) angeordnete, um eine Drehachse (R₆) rotierbar gelagerte Ausgangshohlwelle (6),
- wobei ein Fluidkanal (31) der Eingangshohlwelle (3) über einen Verbindungskanäle (42) mit einem Fluidkanal (61) der Ausgangshohlwelle (6) fluidisch gekoppelt ist,
- wobei im Ausgangshohlwellengehäuse (4) eine ein Teilstück der Ausgangshohlwelle (6) unter Ausbildung einer Spaltdichtung (10) umgreifende Dichtungsbuchse (5) orts- und drehfest zum Ausgangshohlwellengehäuse (4) angeordnet ist,
- wobei die Dichtungsbuchse (5) einen zylindermantelförmigen Grundkörper (51) mit mehreren in den Grundkörper (51) senkrecht zu einer Rotationsachse (S) nebeneinander eingebrachten Fensteröffnungen (52) sowie
- in Richtung der Rotationsachse (S) beidseits der Fensteröffnungen (52) an einer Mantelaußenfläche (53) der Dichtungsbuchse (5) voneinander beabstandete umlaufende Dichtringnuten (55) angeformt sind, in denen Dichtringe (9) zur Ausbildung statischer Dichtungen zum Ausgangshohlwellengehäuse (4) aufgenommen sind,
**dadurch gekennzeichnet, dass**
- ein Abstand (d₁) der voneinander beabstandeten Dichtringnuten (55) in einem radial von der Drehachse des Ausgangshohlwellengehäuses (4) entfernten Mantelbereich des Grundkörpers (51) der Dichtungsbuchse (5) größer ist als ein Abstand (d₂) der voneinander beabstandeten Dichtringnuten (55) in einem radial von der Drehachse (R₄) des Ausgangshohlwellengehäuses (4) nahen Mantelbereich des Grundkörpers (51) der Dichtungsbuchse (5).

2. Hochdruck-Reinigungsvorrichtung (1) nach Anspruch 1, **dadurch gekennzeichnet, dass** ein Innendurchmesser der Dichtungsbuchse (5) im Bereich der Spaltdichtung (12) beidseits der Fensteröffnungen (52) gleich oder nahezu gleich ist.

3. Hochdruck-Reinigungsvorrichtung (1) nach Anspruch 1 oder 2, **dadurch gekennzeichnet, dass** die Eingangshohlwelle (3) mit den Ausgangshohlwelle (6) über ein mechanisches Getriebe (8) miteinander gekoppelt ist.

4. Hochdruck-Reinigungsvorrichtung (1) nach einem der vorhergehenden Ansprüche, **dadurch gekennzeichnet, dass** die Dichtringnuten (55) der Dichtungsbuchse (5) schräg zu einer Ebene senkrecht zur Rotationsachse (S) des Grundkörper (51) ausgerichtet sind.

5. Hochdruck-Reinigungsvorrichtung (1) nach einem der vorhergehenden Ansprüche, **dadurch gekennzeichnet, dass** die Dichtringnuten (55) der Dichtungsbuchse (5) derart ausgerichtet sind, dass der größere Abstand (d₁) der voneinander beabstandeten Dichtringnuten (55) zum kleineren Abstand (d₂) hin kontinuierlich abnimmt.

6. Hochdruck-Reinigungsvorrichtung (1) nach einem der vorhergehenden Ansprüche, **dadurch gekennzeichnet, dass** die Mantelaußenfläche (53) des Grundkörpers (51) der Dichtungsbuchse (5) in einem die Fensteröffnungen (52) ringförmig umgebenden Bereich als taschenartige erste Vertiefung (56) ausgebildet ist.

7. Hochdruck-Reinigungsvorrichtung (1) nach einem der vorhergehenden Ansprüche, **dadurch gekennzeichnet, dass** eine Mantelinnenfläche (54) des Grundkörpers (51) der Dichtungsbuchse (5) in einem die Fensteröffnungen (52) ringförmig umgebenden Bereich als taschenartige zweite Vertiefung (57) ausgebildet ist.

8. Hochdruck-Reinigungsvorrichtung (1) nach einem der vorhergehenden Ansprüche, **dadurch gekennzeichnet, dass** der Grundkörper (51) der Dichtungsbuchse (5) aus einem Lagermetall, vorzugsweise Bronze gefertigt ist.

## Claims

1. A high-pressure cleaning device (1) comprising
- an input hollow shaft housing (2),
- an input hollow shaft (3) mounted in the input hollow shaft housing (2) so as to be rotatable relative thereto about an axis of rotation (R_{3, 4}), which can be connected to a hydraulic pressure source,
- an output hollow shaft housing (4) mounted so as to be rotatable relative to the input hollow shaft housing (2) together with the input hollow shaft (3) about the axis of rotation (R_{3, 4}),
- at least one output hollow shaft (6) arranged in the output hollow shaft housing (4) and mounted so as to be rotatable about an axis of rotation (R₆),
- wherein a fluid channel (31) of the input hollow shaft (3) is fluidically coupled via a connecting channel (42) to a fluid channel (61) of the output hollow shaft (6),
- wherein a sealing bushing (5) that surrounds a section of the output hollow shaft (6) to form a gap seal (10) is arranged in the output hollow shaft housing (4) such that it is fixed in position and rotationally locked to the output hollow shaft housing (4),
- wherein the sealing bushing (5) comprises a cylindrical-shell-shaped base body (51) with a plurality of window openings (52) formed in the base body (51) adjacent to one another perpendicular to an axis of rotation (S), as well as
- circumferential sealing ring grooves (55) spaced apart from one another are formed on an outer surface (53) of the sealing bushing (5) on both sides of the window openings (52) in the direction of the axis of rotation (S), in which sealing rings (9) are received to form static seals with respect to the output hollow shaft housing (4),
**characterized in that**
- a distance (d₁) between the spaced-apart sealing ring grooves (55) in a shell region of the base body (51) of the sealing bushing (5) that is radially distant from the axis of rotation of the output hollow shaft housing (4) is greater than a distance (d₂) between the spaced-apart sealing ring grooves (55) in a circumferential region of the base body (51) of the sealing bushing (5) that is radially close to the axis of rotation (R4) of the output hollow shaft housing (4).

2. High-pressure cleaning device (1) according to claim 1, **characterized in that** an inner diameter of the sealing bushing (5) in the region of the gap seal (12) is equal or nearly equal on both sides of the window openings (52).

3. High-pressure cleaning device (1) according to claim 1 or 2, **characterized in that** the input hollow shaft (3) is coupled to the output hollow shaft (6) via a mechanical gearbox (8).

4. High-pressure cleaning device (1) according to one of the preceding claims, **characterized in that** the sealing ring grooves (55) of the sealing bushing (5) are oriented obliquely to a plane perpendicular to the axis of rotation (S) of the base body (51).

5. High-pressure cleaning device (1) according to one of the preceding claims, **characterized in that** the sealing ring grooves (55) of the sealing bushing (5) are oriented such that the greater distance (d₁) between the spaced-apart sealing ring grooves (55) continuously decreases toward the smaller distance (d₂).

6. High-pressure cleaning device (1) according to any of the preceding claims, **characterized in that** the outer surface (53) of the base body (51) of the sealing bushing (5) is formed as a pocket-like first recess (56) in a region annularly surrounding the window openings (52).

7. High-pressure cleaning device (1) according to one of the preceding claims, **characterized in that** an inner surface (54) of the base body (51) of the sealing bushing (5) is formed as a pocket-like second recess (57) in a region annularly surrounding the window openings (52).

8. High-pressure cleaning device (1) according to one of the preceding claims, **characterized in that** the base body (51) of the sealing bushing (5) is made of a bearing metal, preferably bronze.

## Revendications

1. Dispositif de nettoyage haute pression (1), présentant
- un logement d'arbre creux d'entrée (2),
- un arbre creux d'entrée (3) qui est monté dans le logement d'arbre creux d'entrée (2) de manière rotative par rapport à celui-ci autour d'un axe de rotation (R_{3, 4}) et qui peut être raccordé à une source de pression hydraulique,
- un logement d'arbre creux de sortie (4) qui est monté de manière rotative autour de l'axe de rotation (R_{3, 4}) par rapport au logement d'arbre creux d'entrée (2) conjointement avec l'arbre creux d'entrée (3),
- au moins un arbre creux de sortie (6) disposé dans le logement d'arbre creux de sortie (4) et monté de manière rotative autour d'un axe de rotation (R₆),
- dans lequel un canal de fluide (31) de l'arbre creux d'entrée (3) est couplé de manière fluidique à un canal de fluide (61) de l'arbre creux de sortie (6) par le biais d'un canal de liaison (42),
- dans lequel est disposée, dans le logement d'arbre creux de sortie (4) de manière solidaire en position et en rotation par rapport au logement d'arbre creux de sortie (4), une douille d'étanchéité (5) englobant un tronçon de l'arbre creux de sortie (6) en formant une étanchéité de fente (10),
- dans lequel la douille d'étanchéité (5) présente un corps de base en forme de revêtement cylindrique (51) avec plusieurs ouvertures de fenêtre (52) appliquées les unes à côté des autres dans le corps de base (51) perpendiculairement à l'axe de rotation (S) ainsi que
- dans la direction de l'axe de rotation (S) des deux côtés des ouvertures de fenêtre (52) sont formées des rainures de bagues d'étanchéité (55) circonférentielles, qui sont espacées les unes des autres sur une surface extérieure de revêtement (53) de la douille d'étanchéité (5) et dans lesquelles des bagues d'étanchéité (9) sont reçues pour former des étanchéités statiques par rapport au logement d'arbre creux de sortie (4),
**caractérisé en ce qu'**
- une distance (d₁) des rainures de bagues d'étanchéité (55) espacées les unes des autres dans une zone de revêtement du corps de base (51) de la douille d'étanchéité (5) qui est espacée radialement de l'axe de rotation du logement d'arbre creux de sortie (4) est supérieure à une distance (d₂) des rainures de bagues d'étanchéité (55) espacées les unes des autres dans une zone de revêtement du corps de base (51) de la douille d'étanchéité (5) qui est proche radialement de l'axe de rotation (R₄) du logement d'arbre creux de sortie (4).

2. Dispositif de nettoyage haute pression (1) selon la revendication 1, **caractérisé en ce que** le diamètre intérieur de la douille d'étanchéité (5) au niveau de l'étanchéité de fente (12) est identique ou presque identique des deux côtés des ouvertures de fenêtre (52).

3. Dispositif de nettoyage haute pression (1) selon la revendication 1 ou 2, **caractérisé en ce que** l'arbre creux d'entrée (3) est couplé à l'arbre creux de sortie (6) par le biais d'une transmission mécanique (8).

4. Dispositif de nettoyage haute pression (1) selon l'une des revendications précédentes, **caractérisé en ce que** les rainures de bagues d'étanchéité (55) de la douille d'étanchéité (5) sont orientées de manière inclinée par rapport à un plan perpendiculairement à l'axe de rotation (S) du corps de base (51).

5. Dispositif de nettoyage haute pression (1) selon l'une des revendications précédentes, **caractérisé en ce que** les rainures de bagues d'étanchéité (55) de la douille d'étanchéité (5) sont orientées de telle sorte que la plus grande distance (d₁) des rainures de bagues d'étanchéité (55) espacées les unes des autres diminue continuellement vers la plus petite distance (d₂).

6. Dispositif de nettoyage haute pression (1) selon l'une des revendications précédentes, **caractérisé en ce que** la surface de revêtement extérieure (53) du corps de base (51) de la douille d'étanchéité (5) a la forme d'un premier évidement en forme de poche (56) dans une zone entourant de manière annulaire les ouvertures de fenêtre (52).

7. Dispositif de nettoyage haute pression (1) selon l'une des revendications précédentes, **caractérisé en ce qu'une** surface intérieure de revêtement (54) du corps de base (51) de la douille d'étanchéité (5) a la forme d'un second évidement en forme de poche (57) dans une zone entourant de manière annulaire les ouvertures de fenêtre (52).

8. Dispositif de nettoyage haute pression (1) selon l'une des revendications précédentes, **caractérisé en ce que** le corps de base (51) de la douille d'étanchéité (5) est fabriqué en métal antifriction, de préférence en bronze.
